# EUROPÄISCHE PATENTANMELDUNG

(11) **EP 1 513 148 A1**
(43) Veröffentlichungstag der Anmeldung: **09.03.2005**
(21) Anmeldenummer: 04103993.4
(22) Anmeldetag: 20.08.2004
(51) Int. Cl.: G11B 20/00

(54) **Optisches Plattenlaufwerk mit abschaltbarer Multisession-Funktion**

(30) Priorität: 02.09.2003 DE 10340370
(71) Anmelder: ROBERT BOSCH GMBH, 70442 Stuttgart (DE)
(72) Erfinder: Becker, Volker, 31139 Hildesheim (DE); Freitag, Thomas, 31191 Algermissen (DE); Frerichs, Michael, 31157 Sarstedt (DE); Friedrich, Siegfried, 31177 Harsum (DE); Lange, Ansgar, 49326 Melle (DE)

(57) **Zusammenfassung**

Es wird eine Vorrichtung (1) zur Wiedergabe gespeicherter Daten vorgeschlagen, wobei die Daten auf einem Datenträger (13) gespeichert sind und in wenigstens zwei Datenbereichen abgelegt sind. In einer ersten Betriebsart (104) wird ein Datenbereich wiedergegeben, in einer zweiten Betriebsart (102) alle Datenbereiche, wobei Mittel (17) vorgesehen sind, mit denen zwischen den beiden Betriebsarten umgeschaltet wird.

## Beschreibung

### Stand der Technik

Die Erfindung betrifft eine Vorrichtung zur Wiedergabe gespeicherter Daten, insbesondere zur Wiedergabe von Daten, die auf einem plattenförmigen Speichermedium gespeichert sind.

Im Zusammenhang mit der Aufzeichnung von Daten, beispielsweise Audiodaten, auf einem plattenförmigen Aufzeichnungsträger, beispielsweise einer CD oder einer DVD, ist die sogenannte Multisession-Funktion bekannt. Danach werden die Daten in mehreren Sitzungen auf das Speichermedium geschrieben. Jede Sitzung besitzt eine Einleitung (lead-in), die das Inhaltsverzeichnis TOC der Sitzung enthält, einen Datenbereich, in dem die Nutzdaten (im Beispiel die Audiodaten) abgelegt sind, und einen Abspann (lead-out), der das physikalische Ende einer Sitzung bildet. Die letzte Einleitung umfasst das gesamte Inhaltsverzeichnis des Speichermediums. Die wiederzugebenden Daten sind auf einem solchen Speichermedium also in wenigstens zwei Datenbereichen abgelegt. Die Multisession-Funktion wird dabei von einer ersten Gruppe von Laufwerken, insbesondere CD-Laufwerken, unterstützt. Die in Personal Computern verbauten Laufwerke gehören zu dieser Gruppe. Diese sind also in der Lage, sogenannte Multisession-CD's abzuspielen. Eine andere Gruppe, z.B. Standardaudio-Laufwerke, unterstützen diese Funktion nicht und spielen nur eine, vorzugsweise die erste, Sitzung (erster Datenbereich) einer Multisession-CD ab.

Problematisch ist nun, dass es kopiergeschützte Speichermedien, z.B. Audio-CD's, gibt, bei denen Daten eines Datenbereichs in Standardlaufwerken, nicht aber in Laufwerken mit Multisession-Funktionalität, wiedergegeben werden können. Dies deshalb, weil bei Multisession-CD's mehrere Inhaltsverzeichnisse für jede Sitzung vorhanden sind, an die sich die einzelnen Daten anschließen. In jedem Inhaltsverzeichnis befindet sich ein Hinweis auf die nächst folgende Inhaltsverzeichnis. Eine solche Anordnung der Daten ergibt sich z.B. beim Brennen der Daten mit PC-Laufwerken, wenn in mehreren Brennvorgängen Daten (z.B. Audiotitel) auf einer CD gespeichert werden. Bei jedem neuen Brennvorgang wird eine neue Sitzung erstellt, bestehend aus einem eigenen Inhaltsverzeichnis (Table of Content, TOC) und den eigentlichen Titeln. Eine solche Datenanordnung ergibt sich typischer Weise dann, wenn beispielsweise mittels eines PC's aus dem Internet eine Audio-CD mit mehreren Musikstücken zusammengestellt wird.

Legt man eine solche CD in ein CD-Laufwerk ein, welches die Multisession-Funktionalität unterstützt, so wird zunächst die erste Table of Content angesprungen und das Inhaltsverzeichnis eingelesen. Dann wird gemäß dem Eintrag in der Table of Content zur nächsten Table of Content gesprungen, das dort gespeicherte Inhaltsverzeichnis eingelesen und nach diesem Verfahren jede weitere Table of Content angesprungen und das gesamte Inhaltsverzeichnis für die CD erstellt. Danach werden die Daten nacheinander wiedergegeben.

Ist das Laufwerk nicht multisessionfähig, so wird nur die erste Table of Content gelesen und nur die Daten der ersten Sitzung (des ersten Datenbereichs) wiedergegeben.

Eine Besonderheit gibt es beim Einlegen bestimmter kopiergeschützter Datenträger. Besonders ist dabei an kopiergeschützte CD's gedacht, die Multisession-Charakter haben und damit in der ersten Table of Content einen Verweis auf eine zweite aufweisen. Die erste Table of Content ist entsprechend den vorgeschriebenen Standards aufgebaut, so dass Standard-Laufwerke, die aufgrund ihrer fehlenden Multisession-Funktionalität nur die dieser Table of Content zugeordnete Daten (ersten Datenbereich) abspielen, keine Probleme mit der Datenwiedergabe haben. Die zweite oder eine der folgenden Table of Content, die von Standardwerken nicht angesprungen wird, ist bei dieser Art von kopiergeschützten CD's so defmiert, dass ein Multisession-Laufwerk zu nicht sinnvollen Aktionen bewegt wird. Dies bedeutet, dass diese CD von einem solchen Laufwerk nicht abgespielt werden kann. Dies bedeutet, dass Multisession-fähige Laufwerke nicht einmal die erste, nicht kopiergeschützte Sitzung einer solchen kopiergeschützten CD abzuspielen in der Lage sind.

Vorteile der Erfindung

Ein Laufwerk, bei welchem die Multisession-Funktion abschaltbar ist, hat den Vorteil, dass das oben geschilderte Problem in Verbindung mit kopiergeschützten CD's nicht auftritt und das Laufwerk in der Lage ist, solche kopiergeschützten CD's wie ein Standard-Laufwerk abzuspielen. Die erste Sitzung wird daher bei abgeschalteter Multisession-Funktionalität wiedergegeben. Bei eingeschalteter Multisession-Funktionalität ist das Laufwerk in der Lage, Multisession-CD's wiederzugeben.

Besonders vorteilhaft ist, wenn die Multisession-Funktion unmittelbar durch den Benutzer, vorzugsweise durch ein Bedienelement, abschaltbar ist. Dadurch ist der Benutzer in der Lage, selbst die Konfiguration des Laufwerkes zu bestimmen. In besonders vorteilhafter Weise wird bei einem Lesefehler, welcher auf eine kopiergeschützte CD hinweist, dem Benutzer ein Hinweis darauf gegeben, dass die Multisession-Funktion abgeschaltet werden soll.

In besonders vorteilhafter Weise erfolgt das Abschalten der Multisession-Funktion durch das Laufwerk automatisch, indem vorzugsweise bei einem Lesefehler die Multisession-Funktionalität abgeschaltet wird.

Das Abschalten Multisession-Funktion bedeutet in diesem Zusammenhang, dass beim Lesen des ersten Table of Content der Sprung auf den oder die anderen Table of Content ignoriert wird und unmittelbar nach dem Lesen des ersten Table of Content mit der Wiedergabe der zugeordneten Daten (Tracks) begonnen wird.

Weitere Vorteile ergeben sich aus der nachfolgenden Beschreibung von Ausführungsbeispielen bzw. aus den abhängigen Patentansprüchen.

### Zeichnung

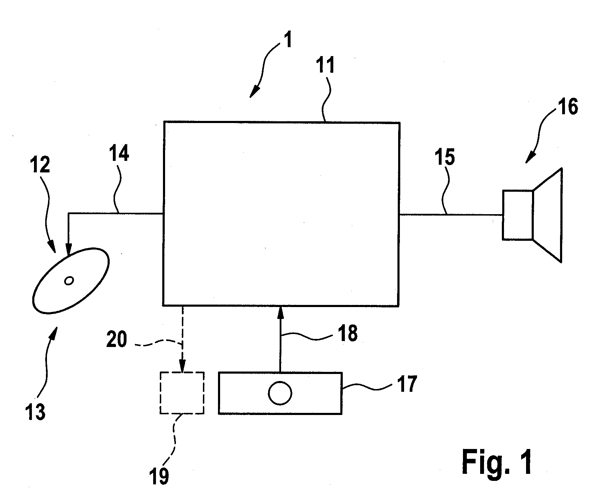

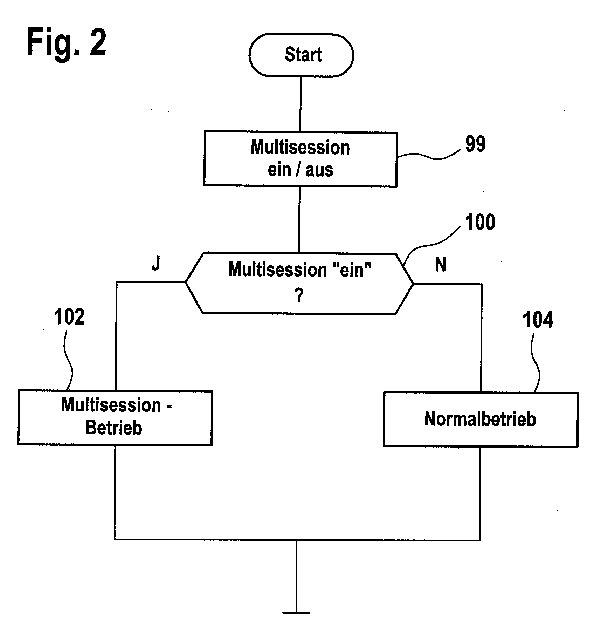

Die Erfindung wird nachstehend anhand der in der Zeichnung dargestellten Ausführungsform näher erläutert. Figur 1 zeigt dabei ein Übersichtschaltbild eines Laufwerkes mit abschaltbarer Multisession-Funktionalität, während in Figur 2 anhand eines Ablaufdiagramms die Funktionsweise eines solchen Laufwerkes skizziert ist.

Beschreibung von Ausführungsbeispielen

Figur 1 zeigt ein Übersichtsbild einer Wiedergabevorrichtung für gespeicherte Daten, insbesondere für Audiodaten, die auf einem plattenförmigen Aufzeichnungsträger wie beispielsweise einer CD oder einer DVD gespeichert sind. Die Wiedergabevorrichtung 1 besteht dabei im wesentlichen aus einer wenigstens einen Mikroprozessor umfassenden Verarbeitungseinheit 11, einem Lesekopf 12 sowie aus einem einschiebbaren, plattenförmigen Aufzeichnungsträger 13, dessen Daten auf optischem Wege vom Lesekopf 12 gelesen und über eine Datenleitung 14 zur Verarbeitungseinheit 11 übertragen werden. Dort werden die gelesenen Daten verarbeitet (beispielsweise Fehlerkorrekturen, Entwürfelung, Dekomprimierungen, etc. vorgenommen). Die aufbereiteten Signale werden dann über eine weitere Datenleitung 15 an ein Wiedergabemittel 16, im Fall von Audiodaten an einen Lautsprecher, im Falle von Video-Daten an einen Bildschirm, abgegeben. Darüber hinaus ist in einem ersten Ausführungsbeispiel ein vom Benutzer der Wiedergabevorrichtung betätigbares Einstellmittel 17 vorgesehen, welches über eine Datenleitung 18 mit der Verarbeitungseinheit 11 verbunden ist. Durch Betätigen des Einstellmittels 17 durch den Benutzer wird ein Signal erzeugt, welches die Verarbeitungseinheit 11 vom Multisession-Betrieb in einen Standardbetrieb umschaltet bzw. eine Umschaltung von einem Standardbetrieb in einen Multisession-Betrieb vornimmt. In einer Ausführung ist die Wiedergabevorrichtung ferner mit einem Anzeigemittel 19 versehen, an welchem die Verarbeitungseinheit 11, die wenigstens einen Mikroprozessor umfasst, an den Benutzer eine Aufforderung zum Abschalten der Multisession-Funktion bzw. zum Einschalten der Standardfunktion anzeigt. Der Prozessor in der Verarbeitungseinheit 11 generiert ein entsprechendes Signal, welches er über die Verbindungsleitung 20 an das Anzeigemittel 19 sendet, wenn er anhand des Datenstroms der CD erkennt, dass ein nicht lesbarer Multisession-Datenträger in das Laufwerk eingelegt ist.

In einem anderen Ausführungsbeispiel erfolgt die Erkennung und Umschaltung des Betriebs automatisch. In diesem Ausführungsbeispiel fehlt das oben beschriebene Einstellelement 17, während das Anzeigemittel zur Anzeige der aktuellen Betriebsart weiterhin vorhanden sein kann. In einer weiteren Ausführung sind beide Vorgehensweisen vorhanden.

Die oben dargestellte Vorgehensweise wird nicht nur in Verbindung mit CD's, sondern auch in Verbindung mit anderen plattenförmigen Datenträger, beispielsweise DVD's, oder Datenträger anderer Form und auch nicht nur in Verbindung mit Audio-Daten, sondern auch mit anderen Daten (z.B. Video-Daten, etc.) eingesetzt. Wesentlich ist, dass der Datenträger wenigstens zwei verschiedene Datenbereiche aufweist, deren Daten in einer Betriebsart wiedergebbar sind, während in einer anderen Betriebsart nur die Daten aus einem Datenbereich wiedergebbar sind. Datenbereich heisst in diesem Zusammenhang nicht notwendigerweise einen zusammenhängenen geographischen Bereich auf dem Träger, an dem die Daten versammelt sind, sondern umfasst auch einen logischen Zusammenhang, bei welchem Daten von verschiedenen Orten des Träger einem logischen Bereich zugeordnet sind.

Die Funktion eines solchen Laufwerks sowohl in der einen als auch in der anderen Betriebsart wurde bereits eingangs vorgestellt und wird hier aus Übersichtlichkeitsgründen nicht wiederholt.

Wie oben erwähnt umfasst die Verarbeitungseinheit 11 wenigstens einen Mikroprozessor. In diesem ist ein Programm implementiert, welches die vorstehend beschriebene Betriebsartenumschaltung umsetzt. Ein solches Programm ist in Figur 2 anhand eines Ablaufdiagramms skizziert.

Das Programm wird zu vorgegebenen Zeitpunkten durchlaufen. Im ersten Schritt 99 wird die Stellung des Einstellelements bzw. der Einstellwert des Signals abgeprüft, ob der Multisession-Betrieb abgeschaltet ist. Ist dies der Fall, wird die Multisession-Software deaktiviert und ein entsprechendes Flag gesetzt. In diesem Schritt wird in einem anderen Ausführungsbeispiel erkannt, dass Daten nicht gelesen werden können. In diesem Fall wird eine Aufforderung an den Bediener angezeigt, dass der Multisession-Betrieb abzuschalten ist. In einem weiteren Ausführungsbeispiel wird automatisch erkannt, dass der Multisession-Betrieb abzuschalten ist. Ist dies z.B. anhand eines speziellen Lesefehlers erkannt worden, wird die Multisession-Software deaktiviert und ein entsprechendes Flag gesetzt. Im darauffolgenden Schritt 100 wird z.B. anhand des beschriebenen Flags überprüft, ob die aktuell eingestellte Betriebsart die Multisession-Funktion umfasst. Ist dies der Fall so wird gemäß Schritt 102 der Multisession-Betrieb durchgeführt. Dazu ist eine Software aktiv, welche gemäß den einschlägigen Standard die Daten ausliest und den Lesekopf steuert. Ist die Multisession-Funktion deaktiviert (die oben beschriebene Software ist dabei inaktiv), so wird gemäß Schritt 104 der Normal- bzw. Standardbetrieb durchgeführt. Dur Durchführung der Betriebsart sind Programme vorgesehen, die in der oben skizzierten Art und Weise die Daten vom Aufzeichnungsträger lesen und über den Ausgang wiedergeben.

## Patentansprüche

1. Vorrichtung zur Wiedergabe gespeicherter Daten, die auf einem Datenträger abgespeichert sind, mit einer Verarbeitungseinheit, die die gespeicherten Daten einliest und an einem Ausgang zur Wiedergabe bereitstellt, wobei die Daten auf dem Datenträger in wenigstens zwei Datenbereichen abspeicherbar sind und in einer ersten Betriebsart Daten eines ersten Datenbereichs durch die Vorrichtung wiedergebbar sind, in einer zweiten Betriebsart die Daten wenigstens zweier Datenbereiche durch die Vorrichtung wiedergebbar sind, **dadurch gekennzeichnet, dass** Mittel vorgesehen sind, welche von der einen zur anderen Betriebsart umschalten.

2. Vorrichtung nach Anspruch 1, **dadurch gekennzeichnet, dass** der Datenträger eine CD oder DVD ist, die zweite Betriebsart die sogenannte Multisession-Betriebsart, die erste Betriebsart eine Standardbetriebsart ist.

3. Vorrichtung nach einem der vorgehenden Ansprüche, **dadurch gekennzeichnet, dass** der Benutzer mittels eines Einstellmittels zwischen den Betriebsarten umschaltet.

4. Vorrichtung nach einem der vorhergehenden Ansprüche, **dadurch gekennzeichnet, dass** die Verarbeitungseinheit zwischen den Betriebsarten automatisch umschaltet.

5. Vorrichtung nach einem der vorhergehenden Ansprüche, **dadurch gekennzeichnet, dass** die Verarbeitungseinheit die Betriebsart automatisch umschaltet, wenn die Daten eines mit wenigstens zwei Datenbereichen versehenen Datenträgers nicht wiedergebbar sind.

6. Vorrichtung nach einem der vorhergehenden Ansprüche, **dadurch gekennzeichnet, dass** die Verarbeitungseinheit eine Umschaltaufforderung an einem Anzeigemittel abgibt, wenn sie erkennt, dass die Daten eines mit wenigstens zwei Datenbereichen versehenen Datenträgers nicht wiedergebbar sind.

7. Vorrichtung nach einem der vorhergehenden Ansprüche, **dadurch gekennzeichnet, dass** die Vorrichtung ein CD- oder DVD-Laufwerk ist.
